# EUROPEAN PATENT APPLICATION

(11) **EP 4 074 780 A1**
(43) Date of publication of application: **19.10.2022**
(21) Application number: 20900011.6
(22) Date of filing: 09.12.2020
(51) Int. Cl.: C08L 101/02, C08L 45/00, C08L 101/00

(54) **RESIN COMPOSITION**

(30) Priority: 12.12.2019 JP 2019224213
(71) Applicant: Kao Corporation, Chuo-ku Tokyo 103-8210 (JP)
(72) Inventor: ONOUE,Akihiro, Wakayama-shi, Wakayama 640-8580 (JP); YOSHIMURA,Tadanori, Wakayama-shi, Wakayama 640-8580 (JP)
(74) Representative: Hoffmann Eitle
(86) International application number: PCT/JP2020/045795
(87) International publication number: WO 2021/117756

(57) **Abstract**

The present invention is a resin composition, including: an addition polymerization resin α having a glass transition temperature of 150°C or more; and a resin β having an aromatic dicarboxylic acid monomer unit A having a hydrophilic group and a dicarboxylic acid monomer unit B having no hydrophilic group. According to the present invention, a resin composition that can be easily removed with water while maintaining the heat resistance can be provided.

## Description

### TECHNICAL FIELD

The present invention relates to a resin composition.

### BACKGROUND ART

In water-soluble polymers, achieving both water solubility and heat resistance has been impossible. Thus, for removal and reclamation of high heat resistant polymer materials, methods with a solvent other than water or by addition of a component other than water to water have been proposed (for example, Patent Document 1 and Patent Document 2).

### PRIOR ART DOCUMENTS

### PATENT DOCUMENT

Patent Document 1: JP-A-2018-24243
Patent Document 2: JP-A-2017-114930

### SUMMARY OF THE INVENTION

### PROBLEMS TO BE SOLVED BY THE INVENTION

In view of the above current situation, a resin composition having both water solubility and high heat resistance has been desired for removing and reclaiming high heat resistant polymer materials with a lower environmental load.

The present invention provides a resin composition that can be easily removed with water while maintaining the heat resistance.

### MEANS FOR SOLVING THE PROBLEMS

The present invention is a resin composition, including: an addition polymerization resin α having a glass transition temperature of 150°C or more; and a resin β having an aromatic dicarboxylic acid monomer unit A having a hydrophilic group and a dicarboxylic acid monomer unit B having no hydrophilic group.

### EFFECT OF THE INVENTION

According to the present invention, a resin composition that can be easily removed with water while maintaining the heat resistance can be provided.

### MODE FOR CARRYING OUT THE INVENTION

### <Resin composition>

The resin composition of the present embodiment includes an addition polymerization resin α having a glass transition temperature of 150°C or more; and a resin β having an aromatic dicarboxylic acid monomer unit A having a hydrophilic group other than a hydrophilic group that constitutes polymerization related to production of the resin (hereinafter, also simply referred to as a hydrophilic group) and a dicarboxylic acid monomer unit B having no hydrophilic group. According to the resin composition of the present embodiment, a resin composition that can be easily removed with water while maintaining the heat resistance can be provided. The reason why the resin composition exhibits such an effect is not clear, but is presumed as follows.

In general, an addition polymerization resin having high heat resistance has low solubility in water. An addition polymerization resin having low solubility in water tends to have low compatibility with a resin having high solubility in water. Thus, when an addition polymerization resin having high heat resistance and a resin having high solubility in water are simply mixed, they tend to separate, and cannot be used as a material. In the resin composition of the present embodiment, the polar group of the addition polymerization resin α contained in the resin composition interacts with the hydrophilic group of the resin β which is a water-soluble resin, and as a result, the addition polymerization resin α and the resin β are compatible with each other. When such a resin composition is brought into contact with water, the water-soluble resin β is dissolved in water, so that the addition polymerization resin α compatible with the resin β is easily disintegrated and easily dispersed in water. Presumably as a result, a resin composition that can be easily removed with water can be provided while maintaining the heat resistance of the addition polymerization resin α.

### [Addition polymerization resin α]

The addition polymerization resin α preferably contains a nitrogen atom from the viewpoint of securing the heat resistance of the addition polymerization resin α.

Examples of the nitrogen atom-containing monomer unit contained in the addition polymerization resin α include monomer units derived from at least one selected from the group consisting of N-substituted maleimides and N-substituted acrylamides. Among them, from the viewpoint of maintaining the heat resistance of the resin composition, at least one selected from the group consisting of a monomer unit derived from a compound in which a hydrogen atom bonded to a nitrogen atom of maleimide and acrylamide is substituted with a hydrocarbon group is preferable, at least one selected from the group consisting of a monomer unit derived from a compound in which a hydrogen atom bonded to a nitrogen atom of maleimide and acrylamide is substituted with an aryl group is more preferable, a monomer unit derived from one or two selected from the group consisting of N-phenylmaleimide and N-phenylacrylamide is still more preferable, and a monomer unit derived from N-phenylmaleimide is still more preferable.

From the viewpoint of maintaining the heat resistance of the resin composition, the addition polymerization resin α is preferably a poly N-substituted maleimide, more preferably a polymer of a compound in which a hydrogen atom bonded to a nitrogen atom of maleimide is substituted with an aryl group, and still more preferably a poly N-phenylmaleimide.

The content of a nitrogen atom in the addition polymerization resin α is preferably 0.5 mmol/g or more, more preferably 1 mmol/g or more, and still more preferably 2 mmol/g or more from the viewpoint of improving compatibility with the resin β, and is preferably 25 mmol/g or less, more preferably 18 mmol/g or less, still more preferably 15 mmol/g or less, and still more preferably 10 mmol/g or less from the viewpoint of maintaining the heat resistance of the resin composition.

The weight average molecular weight of the addition polymerization resin α is preferably 1,000 or more, more preferably 4,000 or more, and still more preferably 5,000 or more from the viewpoint of maintaining the heat resistance of the resin composition, and is preferably 1,000,000 or less, more preferably 500,000 or less, and still more preferably 200,000 or less from the viewpoint of imparting dispersibility in water to the resin composition. In the present specification, the weight average molecular weight is measured by the method described in Examples.

The glass transition temperature of the addition polymerization resin α is 150°C or more, preferably 200°C or more, more preferably 250°C or more, and still more preferably 280°C or more from the viewpoint of maintaining the heat resistance of the resin composition, and is preferably 350°C or less, more preferably 330°C or less from the viewpoint of imparting dispersibility in water to the resin composition. In the present specification, the glass transition temperature is measured by the method described in Examples.

The content of the addition polymerization resin α in the resin composition is preferably 10% by mass or more, more preferably 50% by mass or more, still more preferably 60% by mass or more, still more preferably 70% by mass or more, still more preferably 85% by mass or more, and still more preferably 90% by mass or more from the viewpoint of maintaining the heat resistance of the resin composition, and is preferably 99% by mass or less, more preferably 95% by mass or less, and still more preferably 85% by mass or less from the viewpoint of imparting dispersibility in water to the resin composition.

A method for producing the addition polymerization resin α is not particularly limited, and a known method for producing an addition polymerization resin can be applied.

### [Resin β]

### [Aromatic dicarboxylic acid monomer unit A]

The resin β has an aromatic dicarboxylic acid monomer unit having a hydrophilic group. In the present specification, the aromatic dicarboxylic acid monomer unit having a hydrophilic group in the resin β is referred to as an aromatic dicarboxylic acid monomer unit A. The aromatic dicarboxylic acid from which the aromatic dicarboxylic acid monomer unit A is derived is referred to as an aromatic dicarboxylic acid A.

Examples of the hydrophilic group include at least one selected from the group consisting of a primary amino group, a secondary amino group, a tertiary amino group, a quaternary ammonium base, an oxyalkylene group, a hydroxy group, a carboxyl group, a carboxylate group, a phosphoric acid group, a phosphate group, a sulfonic acid group, and a sulfonate group from the viewpoint of improving compatibility with the addition polymerization resin α and the viewpoint of imparting dispersibility in water to the resin composition. Among them, at least one selected from the group consisting of a quaternary ammonium base, an oxyalkylene group, a carboxylate group, a phosphate group, and a sulfonate group is preferable, at least one selected from the group consisting of a quaternary ammonium base, an oxyalkylene group, and a sulfonate group is more preferable, and a sulfonate group is still more preferable from the same viewpoints.

The sulfonate group is preferably a sulfonate group represented by -SO₃M (M represents a counterion of a sulfonic acid group that constitutes the sulfonate group, and from the same viewpoints, M is preferably at least one selected from the group consisting of a metal ion and an ammonium ion, more preferably at least one selected from the group consisting of a metal ion, still more preferably at least one selected from the group consisting of an alkali metal ion and an alkaline earth metal ion, still more preferably at least one selected from the group consisting of an alkali metal ion, still more preferably at least one selected from the group consisting of a sodium ion and a potassium ion, and still more preferably a sodium ion.) from the viewpoint of improving compatibility with the addition polymerization resin α and the viewpoint of imparting dispersibility in water to the resin composition.

The content of the hydrophilic group in the resin β is preferably 0.5 mmol/g or more, more preferably 0.6 mmol/g or more, and still more preferably 0.7 mmol/g or more from the viewpoint of improving compatibility with the addition polymerization resin α and the viewpoint of imparting dispersibility in water to the resin composition, and is preferably 3 mmol/g or less, more preferably 2 mmol/g or less, and still more preferably 1.5 mmol/g or less from the viewpoint of maintaining the heat resistance of the resin composition. The content of the hydrophilic group in the resin β is preferably 0.5 to 3.0 mmol/g, more preferably 0.6 to 2.0 mmol/g, and still more preferably 0.7 to 1.5 mmol/g from the viewpoint of improving compatibility with the addition polymerization resin α, the viewpoint of imparting dispersibility in water to the resin composition, and the viewpoint of maintaining the heat resistance of the resin composition.

The aromatic dicarboxylic acid A is preferably at least one selected from the group consisting of an aromatic dicarboxylic acid having the hydrophilic group, more preferably at least one selected from the group consisting of a hydroxy group-containing aromatic dicarboxylic acid, a primary amino group-containing aromatic dicarboxylic acid, a sulfonic acid group-containing aromatic dicarboxylic acid, and a sulfonate group-containing aromatic dicarboxylic acid, and still more preferably at least one selected from the group consisting of a sulfonate group-containing aromatic dicarboxylic acid from the viewpoint of improving compatibility with the addition polymerization resin α, the viewpoint of imparting dispersibility in water to the resin composition, and the viewpoint of maintaining the heat resistance of the resin composition. Among them, at least one selected from the group consisting of a sulfophthalic acid and a sulfonaphthalenedicarboxylic acid is preferable, at least one selected from the group consisting of a sulfophthalic acid is more preferable, at least one selected from the group consisting of a sulfoisophthalic acid and a sulfoterephthalic acid is still more preferable, and 5-sulfoisophthalic acid is further preferable from the same viewpoints.

The percentage of an amount of substance of the aromatic dicarboxylic acid monomer unit A based on a total of an amount of substance of all monomer units of the resin β is preferably 5 mol% or more, more preferably 7 mol% or more, still more preferably 10 mol% or more, and still more preferably 12 mol% or more from the viewpoint of improving compatibility with the addition polymerization resin α and the viewpoint of imparting dispersibility in water to the resin composition, and is preferably 40 mol% or less, more preferably 37 mol% or less, and still more preferably 35 mol% or less from the viewpoint of maintaining the heat resistance of the resin composition. The percentage of an amount of substance of the aromatic dicarboxylic acid monomer unit A based on a total of an amount of substance of all monomer units of the resin β is preferably 5 to 40 mol%, more preferably 7 to 40 mol%, still more preferably 10 to 37 mol%, and still more preferably 12 to 35 mol% from the viewpoint of improving compatibility with the addition polymerization resin α, the viewpoint of imparting dispersibility in water to the resin composition, and the viewpoint of maintaining the heat resistance of the resin composition.

The percentage of an amount of substance of the aromatic dicarboxylic acid monomer unit A based on a total of an amount of substance of all dicarboxylic acid monomer units in the resin β is preferably 10 mol% or more, more preferably 15 mol% or more, still more preferably 20 mol% or more, and still more preferably 25 mol% or more from the viewpoint of improving compatibility with the addition polymerization resin α and the viewpoint of imparting dispersibility in water to the resin composition, and is preferably 80 mol% or less, more preferably 70 mol% or less, and still more preferably 65 mol% or less from the viewpoint of maintaining the heat resistance of the resin composition. The percentage of an amount of substance of the aromatic dicarboxylic acid monomer unit A based on a total of an amount of substance of all dicarboxylic acid monomer units in the resin β is preferably 10 to 80 mol%, more preferably 15 to 70 mol%, still more preferably 20 to 65 mol%, and still more preferably 25 to 65 mol% from the viewpoint of improving compatibility with the addition polymerization resin α, the viewpoint of imparting dispersibility in water to the resin composition, and the viewpoint of maintaining the heat resistance of the resin composition.

### [Dicarboxylic acid monomer unit B]

The resin β has a dicarboxylic acid monomer unit having no hydrophilic group above. In the present specification, the dicarboxylic acid monomer unit having no hydrophilic group in the resin β is referred to as a dicarboxylic acid monomer unit B. The dicarboxylic acid from which the dicarboxylic acid monomer unit B is derived is referred to as a dicarboxylic acid B.

The dicarboxylic acid B is more preferably at least one selected from the group consisting of the aromatic dicarboxylic acid having no hydrophilic group above and the aliphatic dicarboxylic acid having no hydrophilic group above from the viewpoint of maintaining the heat resistance of the resin composition. Among them, from the same viewpoint, at least one selected from the group consisting of terephthalic acid, isophthalic acid, a furandicarboxylic acid, a naphthalenedicarboxylic acid, a cyclohexanedicarboxylic acid, and an adamantanedicarboxylic acid is still more preferable, at least one selected from the group consisting of terephthalic acid, 2,5-furandicarboxylic acid, and 2,6-naphthalenedicarboxylic acid is still more preferable, and 2,6-naphthalenedicarboxylic acid is still more preferable.

The percentage of an amount of substance of the dicarboxylic acid monomer unit B based on a total of an amount of substance of all monomer units in the resin β is preferably 10 mol% or more, more preferably 13 mol% or more, and still more preferably 15 mol% or more from the viewpoint of maintaining the heat resistance of the resin composition, and is preferably 45 mol% or less, more preferably 42 mol% or less, and still more preferably 40 mol% or less from the viewpoint of improving compatibility with the addition polymerization resin α. The percentage of an amount of substance of the monomer unit B based on a total of an amount of substance of all monomer units in the resin β is preferably 10 to 45 mol%, more preferably 13 to 42 mol%, and still more preferably 15 to 40 mol% from the viewpoint of maintaining the heat resistance of the resin composition and the viewpoint of improving compatibility with the addition polymerization resin α.

The percentage of an amount of substance of the dicarboxylic acid monomer unit B based on a total of an amount of substance of all dicarboxylic acid monomer units in the resin β is preferably 20 mol% or more, more preferably 30 mol% or more, and still more preferably 35 mol% or more from the viewpoint of maintaining the heat resistance of the resin composition, and is preferably 90 mol% or less, more preferably 85 mol% or less, and still more preferably 80 mol% or less from the viewpoint of improving compatibility with the addition polymerization resin α. The percentage of an amount of substance of the dicarboxylic acid monomer unit B based on a total of an amount of substance of all dicarboxylic acid monomer units in the resin β is preferably 20 to 90 mol%, more preferably 30 to 85 mol%, and still more preferably 35 to 80 mol% from the viewpoint of maintaining the heat resistance of the resin composition and the viewpoint of improving compatibility with the addition polymerization resin α.

The molar ratio of the aromatic dicarboxylic acid monomer unit A to the dicarboxylic acid monomer unit B in the resin β (the aromatic dicarboxylic acid monomer unit A/the dicarboxylic acid monomer unit B) is preferably 10/90 or more, more preferably 15/85 or more, still more preferably 18/82 or more, and still more preferably 20/80 or more from the viewpoint of improving compatibility with the addition polymerization resin α, and is preferably 80/20 or less, more preferably 70/30 or less, and still more preferably 65/35 or less from the viewpoint of maintaining the heat resistance of the resin composition.

### [Monomer unit C]

The resin β preferably has a monomer unit derived from a monomer having two functional groups that are reactive with a carboxy group. In the present specification, a monomer having two functional groups that are reactive with a carboxy group is referred to as a monomer C, and a monomer unit derived from the monomer C is referred to as a monomer unit C.

Examples of the monomer C include at least one selected from the group consisting of a diol, a diamine, and an alkanolamine. As the monomer unit C, an aliphatic diol monomer unit, an aromatic diol monomer unit, an aliphatic diamine monomer unit, an aliphatic diamine monomer unit and the like are preferable, and among these, an aliphatic diol monomer unit derived from an aliphatic diol is preferable.

The carbon number of an aliphatic diol from which the aliphatic diol monomer unit is derived is preferably 2 or more from the viewpoint of imparting dispersibility in water to the resin composition and the viewpoint of maintaining the heat resistance of the resin composition, and is preferably 31 or less, more preferably 25 or less, still more preferably 20 or less, and still more preferably 15 or less from the same viewpoints.

Examples of the aliphatic diol include at least one selected from the group consisting of a chain diol and a cyclic diol, and from the viewpoint of imparting dispersibility in water to the resin composition and the viewpoint of maintaining the heat resistance of the resin composition, a chain diol is preferable.

The carbon number of the chain diol is preferably 2 or more from the viewpoint of imparting dispersibility in water to the resin composition and the viewpoint of maintaining the heat resistance of the resin composition, and is preferably 6 or less, more preferably 4 or less, still more preferably 3 or less, and still more preferably 2 from the same viewpoints.

Though the aliphatic diol can have an ether oxygen, when the aliphatic diol is a chain aliphatic diol, the number of the ether oxygen is preferably 1 or less from the viewpoint of imparting dispersibility in water to the resin composition and the viewpoint of maintaining the heat resistance of the resin composition, and when the aliphatic diol C is a cyclic aliphatic diol, the number of the ether oxygen is preferably 2 or less from the same viewpoints.

The chain diol is preferably at least one selected from the group consisting of ethylene glycol, 1,2-propanediol, 1,3-propanediol, diethylene glycol, and dipropylene glycol, more preferably at least one selected from the group consisting of ethylene glycol, 1,2-propanediol, and 1,3-propanediol, and still more preferably ethylene glycol from the viewpoint of imparting dispersibility in water to the resin composition and the viewpoint of maintaining the heat resistance of the resin composition.

The carbon number of an aliphatic diamine from which the aliphatic diamine monomer unit is derived is preferably 2 or more, more preferably 3 or more, and still more preferably 4 or more from the viewpoint of imparting dispersibility in water to the resin composition and the viewpoint of maintaining the heat resistance of the resin composition, and is preferably 30 or less, more preferably 20 or less, and still more preferably 10 or less from the same viewpoints.

Examples of the aliphatic diamine include at least one selected from the group consisting of a chain diamine and a cyclic diamine, and from the viewpoint of imparting dispersibility in water to the resin composition and the viewpoint of maintaining the heat resistance of the resin composition, a chain diamine is preferable.

The chain diamine is still more preferably hexamethylenediamine from the viewpoint of imparting dispersibility in water to the resin composition and the viewpoint of maintaining the heat resistance of the resin composition.

### [Other monomer units]

The resin β can have other monomer units other than the aromatic dicarboxylic acid monomer unit A, the dicarboxylic acid monomer unit B, and the monomer unit C as long as the effects of the present embodiment are not impaired.

The resin β is a polyester, a polyamide, or a polyesteramide, and is preferably a polyester. Examples of the resin β include a resin having a unit represented by the following General Formula (1) and a unit represented by the following General Formula (2).

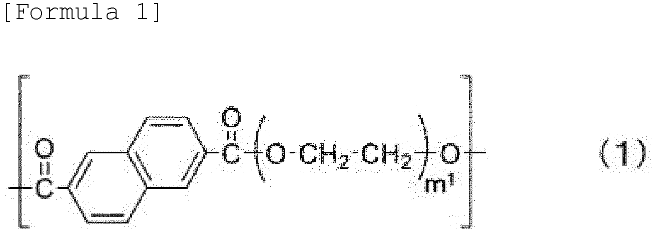

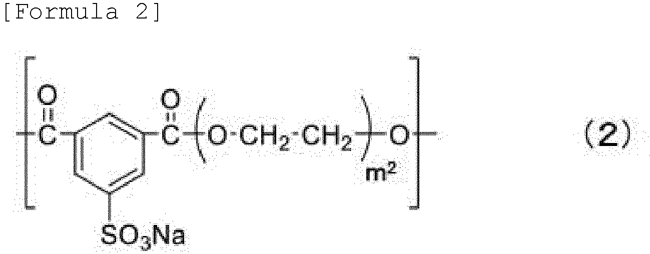

In the General Formulae (1) and (2), m¹ and m² represent the average number of moles of ethylene glycol monomer units added, and are each 1 to 3, and preferably 1, and units of the General Formulae (1) and (2) are bonded in a block bond or a random bond, and preferably bonded in a random bond.

The weight average molecular weight of the resin β is preferably 3,000 or more, more preferably 5,000 or more, still more preferably 10,000 or more, and still more preferably 15,000 or more from the viewpoint of maintaining the heat resistance of the resin composition, and is preferably 80,000 or less, more preferably 50,000 or less, and still more preferably 30,000 or less from the viewpoint of imparting dispersibility in water to the resin composition.

The glass transition temperature of the resin β is preferably 50°C or more, more preferably 90°C or more, and still more preferably 100°C or more from the viewpoint of maintaining the heat resistance of the resin composition, and is preferably 250°C or less, more preferably 150°C or less, and still more preferably 120°C or less from the viewpoint of improving compatibility with the addition polymerization resin α.

The content of the resin β in the resin composition is preferably 1% by mass or more, more preferably 5% by mass or more, and still more preferably 15% by mass or more from the viewpoint of imparting dispersibility in water to the resin composition, and is preferably 90% by mass or less, more preferably 50% by mass or less, still more preferably 40% by mass or less, still more preferably 30% by mass or less, still more preferably 15% by mass or less, and still more preferably 10% by mass or less from the viewpoint of maintaining the heat resistance.

The method for producing the resin β is not particularly limited, and a conventionally known method can be applied.

The mass ratio of the addition polymerization resin α to the resin β in the resin composition (mass of the addition polymerization resin α/mass of the resin β) is preferably 10/90 or more, more preferably 50/50 or more, and still more preferably 70/30 or more from the viewpoint of maintaining the heat resistance of the resin composition, and is preferably 99/1 or less, more preferably 95/5 or less, and still more preferably 85/15 or less from the viewpoint of imparting dispersibility in water to the resin composition. The mass ratio of the addition polymerization resin α to the resin β in the resin composition is preferably 10/90 to 99/1, more preferably 50/50 to 95/5, and still more preferably 70/30 to 85/15 from the viewpoint of maintaining the heat resistance of the resin composition and the viewpoint of imparting dispersibility in water to the resin composition.

The percentage of an amount of substance of a hydrophilic group in the resin β based on an amount of substance of a nitrogen atom in the addition polymerization resin α in the resin composition is preferably 0.2 mol% or more, more preferably 0.5 mol% or more, and still more preferably 1 mol% or more from the viewpoint of imparting dispersibility in water to the resin composition, and is preferably 60 mol% or less, more preferably 10 mol% or less, and still more preferably 5 mol% or less from the viewpoint of maintaining the heat resistance of the resin composition. The percentage of an amount of substance of a hydrophilic group in the resin β based on an amount of substance of a nitrogen atom in the addition polymerization resin α in the resin composition is preferably 0.2 mol% to 60 mol%, more preferably 0.5 mol% to 10 mol%, and still more preferably 1 mol% to 5 mol% from the viewpoint of maintaining the heat resistance of the resin composition and the viewpoint of imparting dispersibility in water to the resin composition.

The resin composition can include other components as long as the effects of the present embodiment are not impaired. Examples of the other components include polymers other than the addition polymerization resin α and the resin β, plasticizers such as benzoic acid polyalkylene glycol diester, fillers such as calcium carbonate, magnesium carbonate, glass spheres, graphite, carbon black, carbon fiber, glass fiber, talc, wollastonite, mica, alumina, silica, kaolin, whisker, and silicon carbide, compatibilizers, and elastomers.

The glass transition temperature (Tg) of the resin composition is preferably 100°C or more, more preferably 150°C or more, still more preferably 200°C or more, and still more preferably 240°C or more from the viewpoint of ease of use of the resin composition under high temperature conditions, and is preferably 300°C or less, more preferably 280°C or less, and still more preferably 270°C or less from the same viewpoint.

The method for producing the resin composition is not particularly limited, and the resin composition can be produced by a known method. Examples of the method for producing the resin composition include a method for producing the resin composition by kneading raw materials with a kneader such as a batch-type kneader and a twinscrew extruder.

The resin composition can be used as a material of a support material in a method for producing a three-dimensional object by a heat fused layer system including the steps of obtaining a three-dimensional object precursor including a three-dimensional object and a support material; and removing the support material by bringing the three-dimensional object precursor into contact with neutral water. The resin composition can be used as a material for a water-soluble printing layer and a printing primer layer. The resin composition can be used as a material for a water-soluble coating layer.

### <Method for removing resin composition>

The method for removing a resin composition of the present embodiment is a method for removing a resin composition, including the step of: bringing the resin composition into contact with water to dissolve the resin composition.

The method of bringing a resin composition into contact with water is preferably a method of soaking the resin composition in water from the viewpoint of productivity improvement and the viewpoint of ease of work. Dissolution of the resin composition can be promoted by irradiating ultrasonic waves during soak.

Examples of the water include deionized water, pure water, tap water, and industrial water, and deionized water and tap water are preferable from the viewpoint of availability.

The amount of the water used is preferably 10 mass times or more, and more preferably 20 mass times or more the resin composition from the viewpoint of the solubility of the resin composition, and the amount is preferably 10000 mass times or less, more preferably 5000 mass times or less, still more preferably 1000 mass times or less, and still more preferably 100 mass times or less the resin composition from the viewpoint of reducing the environmental load.

The time for bringing the resin composition into contact with water is preferably 1 second or more from the viewpoint of dissolving the resin composition, and is preferably 1 hour or less, more preferably 10 minutes or less, and still more preferably 1 minute or less from the viewpoint of productivity improvement. The water temperature is preferably 50°C or more, and more preferably 60°C or more from the viewpoint of dissolving the resin composition, and is preferably 90°C or less, and more preferably 80°C or less from the viewpoint of reducing the environmental load.

Regarding the above-mentioned embodiments, the present invention further discloses the following composition and the like.
<1> A resin composition, including:
   an addition polymerization resin α having a glass transition temperature of 150°C or more; and
   a resin β having an aromatic dicarboxylic acid monomer unit A having a hydrophilic group and a dicarboxylic acid monomer unit B having no hydrophilic group.
<2> The resin composition according to <1>, wherein a glass transition temperature of the addition polymerization resin α is preferably 200°C or more, more preferably 250°C or more, and still more preferably 280°C or more.
<3> The resin composition according to <1> or <2>, wherein a glass transition temperature of the addition polymerization resin α is preferably 350°C or less, and more preferably 330°C or less.
<4> The resin composition according to any one of <1> to <3>, wherein a glass transition temperature of the addition polymerization resin α is preferably 200°C or more and 350°C or less, more preferably 250°C or more and 350°C or less, still more preferably 280°C or more and 350°C or less, and still more preferably 280°C or more and 330°C or less.
<5> The resin composition according to any one of <1> to <4>, wherein a mass ratio of the addition polymerization resin α to the resin β in the resin composition is preferably 10/90 or more, more preferably 50/50 or more, and still more preferably 70/30 or more.
<6> The resin composition according to any one of <1> to <5>, wherein a mass ratio of the addition polymerization resin α to the resin β in the resin composition is preferably 99/1 or less, more preferably 95/5 or less, and still more preferably 85/15 or less.
<7> The resin composition according to any one of <1> to <6>, wherein a mass ratio of the addition polymerization resin α to the resin β in the resin composition is preferably 10/90 or more and 99/1 or less, more preferably 50/50 or more and 95/5 or less, and still more preferably 70/30 or more and 85/15 or less.
<8> The resin composition according to any one of <1> to <7>, wherein the addition polymerization resin α preferably contains a nitrogen atom.
<9> The resin composition according to any one of <1> to <8>, wherein a nitrogen atom-containing monomer unit contained in the addition polymerization resin α is preferably at least one selected from the group consisting of a monomer unit derived from a compound in which a hydrogen atom bonded to a nitrogen atom of maleimide and acrylamide is substituted with a hydrocarbon group, more preferably at least one selected from the group consisting of a monomer unit derived from a compound in which a hydrogen atom bonded to a nitrogen atom of maleimide and acrylamide is substituted with an aryl group, and still more preferably a monomer unit derived from one or two selected from the group consisting of N-phenylmaleimide and N-phenylacrylamide.
<10> The resin composition according to any one of <1> to <9>, wherein the addition polymerization resin α is preferably a poly N-substituted maleimide, more preferably a polymer of a compound in which a hydrogen atom bonded to a nitrogen atom of maleimide is substituted with an aryl group, and still more preferably a poly N-phenylmaleimide.
<11> The resin composition according to any one of <1> to <10>, wherein a content of a nitrogen atom in the addition polymerization resin α is preferably 0.5 mmol/g or more, more preferably 1 mmol/g or more, and still more preferably 2 mmol/g or more.
<12> The resin composition according to any one of <1> to <11>, wherein a content of a nitrogen atom in the addition polymerization resin α is preferably 25 mmol/g or less, more preferably 18 mmol/g or less, still more preferably 15 mmol/g or less, and still more preferably 10 mmol/g or less.
<13> The resin composition according to any one of <1> to <12>, wherein a weight average molecular weight of the addition polymerization resin α is preferably 1000 or more, more preferably 4000 or more, and still more preferably 5000 or more.
<14> The resin composition according to any one of <1> to <13>, wherein a weight average molecular weight of the addition polymerization resin α is preferably 1,000,000 or less, more preferably 500,000 or less, and still more preferably 200,000 or less.
<15> The resin composition according to any one of <1> to <14>, wherein a content of the addition polymerization resin α in the resin composition is preferably 10% by mass or more, more preferably 50% by mass or more, still more preferably 60% by mass or more, still more preferably 70% by mass or more, still more preferably 85% by mass or more, and still more preferably 90% by mass or more.
<16> The resin composition according to any one of <1> to <15>, wherein a content of the addition polymerization resin α in the resin composition is preferably 99% by mass or less, more preferably 95% by mass or less, and still more preferably 85% by mass or less.
<17> The resin composition according to any one of <1> to <16>, wherein the hydrophilic group is preferably at least one selected from the group consisting of a primary amino group, a secondary amino group, a tertiary amino group, a quaternary ammonium base, an oxyalkylene group, a hydroxyl group, a carboxyl group, a carboxylate group, a phosphoric acid group, a phosphate group, a sulfonic acid group, and a sulfonate group, preferably at least one selected from the group consisting of a quaternary ammonium base, an oxyalkylene group, a carboxylate group, a phosphate group, and a sulfonate group, more preferably at least one selected from the group consisting of a quaternary ammonium base, an oxyalkylene group, and a sulfonate group, and still more preferably a sulfonate group.
<18> The resin composition according to any one of <1> to <17>, wherein the sulfonate group is preferably a sulfonate group represented by -SO₃M (M represents a counterion of a sulfonic acid group that constitutes the sulfonate group, and is preferably at least one selected from the group consisting of a metal ion and an ammonium ion, more preferably at least one selected from the group consisting of a metal ion, still more preferably at least one selected from the group consisting of an alkali metal ion and an alkaline earth metal ion, still more preferably at least one selected from the group consisting of an alkali metal ion, still more preferably one or two selected from the group consisting of a sodium ion and a potassium ion, and still more preferably a sodium ion).
<19> The resin composition according to any one of <1> to <18>, wherein a content of the hydrophilic group in the resin β is preferably 0.5 mmol/g or more, more preferably 0.6 mmol/g or more, and still more preferably 0.7 mmol/g or more.
<20> The resin composition according to any one of <1> to <19>, wherein a content of the hydrophilic group in the resin β is preferably 3 mmol/g or less, more preferably 2 mmol/g or less, and still more preferably 1.5 mmol/g or less.
<21> The resin composition according to any one of <1> to <20>, wherein a content of the hydrophilic group in the resin β is preferably 0.5 to 3.0 mmol/g, more preferably 0.6 to 2.0 mmol/g, and still more preferably 0.7 to 1.5 mmol/g.
<22> The resin composition according to any one of <1> to <21>, wherein an aromatic dicarboxylic acid A from which the aromatic dicarboxylic acid monomer unit A is derived is preferably at least one selected from the group consisting of an aromatic dicarboxylic acid having the hydrophilic group, more preferably at least one selected from the group consisting of a hydroxy group-containing aromatic dicarboxylic acid, a primary amino group-containing aromatic dicarboxylic acid, a sulfonic acid group-containing aromatic dicarboxylic acid, and a sulfonate group-containing aromatic dicarboxylic acid, still more preferably at least one selected from the group consisting of a sulfonate group-containing aromatic dicarboxylic acid, still more preferably at least one selected from the group consisting of a sulfophthalic acid and a sulfonaphthalenedicarboxylic acid, still more preferably at least one selected from the group consisting of sulfophthalic acid, still more preferably at least one selected from the group consisting of a sulfoisophthalic acid and a sulfoterephthalic acid, and still more preferably 5-sulfoisophthalic acid.
<23> The resin composition according to any one of <1> to <22>, wherein a percentage of an amount of substance of the aromatic dicarboxylic acid monomer unit A based on a total of an amount of substance of all monomer units of the resin β is preferably 5 mol% or more, more preferably 7 mol% or more, still more preferably 10 mol% or more, and still more preferably 12 mol% or more.
<24> The resin composition according to any one of <1> to <23>, wherein a percentage of an amount of substance of the aromatic dicarboxylic acid monomer unit A based on a total of an amount of substance of all monomer units of the resin β is preferably 40 mol% or less, more preferably 37 mol% or less, and still more preferably 35 mol% or less.
<25> The resin composition according to any one of <1> to <24>, wherein a percentage of an amount of substance of the aromatic dicarboxylic acid monomer unit A based on a total of an amount of substance of all monomer units of the resin β is preferably 5 to 40 mol%, more preferably 7 to 40 mol%, still more preferably 10 to 37 mol%, and still more preferably 12 to 35 mol%.
<26> The resin composition according to any one of <1> to <25>, wherein a percentage of an amount of substance of the aromatic dicarboxylic acid monomer unit A based on a total of an amount of substance of all dicarboxylic acid monomer units in the resin β is preferably 10 mol% or more, more preferably 15 mol% or more, still more preferably 20 mol% or more, and still more preferably 25 mol% or more.
<27> The resin composition according to any one of <1> to <26>, wherein a percentage of an amount of substance of the aromatic dicarboxylic acid monomer unit A based on a total of an amount of substance of all dicarboxylic acid monomer units in the resin β is preferably 80 mol% or less, more preferably 70 mol% or less, and still more preferably 65 mol% or less.
<28> The resin composition according to any one of <1> to <27>, wherein a percentage of an amount of substance of the aromatic dicarboxylic acid monomer unit A based on a total of an amount of substance of all dicarboxylic acid monomer units in the resin β is preferably 10 to 80 mol%, more preferably 15 to 70 mol%, still more preferably 20 to 65 mol%, and still more preferably 25 to 65 mol%.
<29> The resin composition according to any one of <1> to <28>, wherein a dicarboxylic acid B from which the dicarboxylic acid monomer unit B is derived is preferably at least one selected from the group consisting of an aromatic dicarboxylic acid having no hydrophilic group above and an aliphatic dicarboxylic acid having no hydrophilic group above, more preferably at least one selected from the group consisting of terephthalic acid, isophthalic acid, a furandicarboxylic acid, a naphthalenedicarboxylic acid, a cyclohexanedicarboxylic acid, and an adamantanedicarboxylic acid, still more preferably at least one selected from the group consisting of terephthalic acid, 2,5-furandicarboxylic acid, and 2,6-naphthalenedicarboxylic acid, and still more preferably 2,6-naphthalenedicarboxylic acid,
<30> The resin composition according to any one of <1> to <29>, wherein a percentage of an amount of substance of the dicarboxylic acid monomer unit B based on a total of an amount of substance of all monomer units in the resin β is preferably 10 mol% or more, more preferably 13 mol% or more, and still more preferably 15 mol% or more.
<31> The resin composition according to any one of <1> to <30>, wherein a percentage of an amount of substance of the dicarboxylic acid monomer unit B based on a total of an amount of substance of all monomer units in the resin β is preferably 45 mol% or less, more preferably 42 mol% or less, and still more preferably 40 mol% or less.
<32> The resin composition according to any one of <1> to <31>, wherein a percentage of an amount of substance of the dicarboxylic acid monomer unit B based on a total of an amount of substance of all monomer units in the resin β is preferably 10 to 45 mol%, more preferably 13 to 42 mol%, and still more preferably 15 to 40 mol%.
<33> The resin composition according to any one of <1> to <32>, wherein a percentage of an amount of substance of the dicarboxylic acid monomer unit B based on a total of an amount of substance of all dicarboxylic acid monomer units in the resin β is preferably 20 mol% or more, more preferably 30 mol% or more, and still more preferably 35 mol% or more.
<34> The resin composition according to any one of <1> to <33>, wherein a percentage of an amount of substance of the dicarboxylic acid monomer unit B based on a total of an amount of substance of all dicarboxylic acid monomer units in the resin β is preferably 90 mol% or less, more preferably 85 mol% or less, and still more preferably 80 mol% or less.
<35> The resin composition according to any one of <1> to <34>, wherein a percentage of an amount of substance of the dicarboxylic acid monomer unit B based on a total of an amount of substance of all dicarboxylic acid monomer units in the resin β is preferably 20 to 90 mol%, more preferably 30 to 85 mol%, and still more preferably 35 to 80 mol%.
<36> The resin composition according to any one of <1> to <35>, wherein a molar ratio of the aromatic dicarboxylic acid monomer unit A to the dicarboxylic acid monomer unit B in the resin β (the aromatic dicarboxylic acid monomer unit A/the dicarboxylic acid monomer unit B) is preferably 10/90 or more, more preferably 15/85 or more, still more preferably 18/82 or more, and still more preferably 20/80 or more.
<37> The resin composition according to any one of <1> to <36>, wherein a molar ratio of the aromatic dicarboxylic acid monomer unit A to the dicarboxylic acid monomer unit B in the resin β (the aromatic dicarboxylic acid monomer unit A/the dicarboxylic acid monomer unit B) is preferably 80/20 or less, more preferably 70/30 or less, and still more preferably 65/35 or less.
<38> The resin composition according to any one of <1> to <37>, wherein the resin β preferably has a monomer unit C derived from a monomer C having two functional groups that are reactive with a carboxy group.
<39> The resin composition according to <38>, wherein the monomer C is preferably at least one selected from the group consisting of a diol, a diamine, and an alkanolamine.
<40> The resin composition according to <38> or <39>, wherein the monomer unit C is preferably an aliphatic diol monomer unit, an aromatic diol monomer unit, an aliphatic diamine monomer unit, an aliphatic diamine monomer unit, and more preferably an aliphatic diol monomer unit.
<41> The resin composition according to <40>, wherein a carbon number of an aliphatic diol from which the aliphatic diol monomer unit is derived is preferably 2 or more.
<42> The resin composition according to <40> to <41>, wherein a carbon number of an aliphatic diol from which the aliphatic diol monomer unit is derived is preferably 31 or less, more preferably 25 or less, still more preferably 20 or less, and still more preferably 15 or less.
<43> The resin composition according to any one of <40> to <42>, wherein an aliphatic diol from which the aliphatic diol monomer unit is derived is preferably at least one selected from the group consisting of a chain diol and a cyclic diol, and more preferably a chain diol.
<44> The resin composition according to <43>, wherein a carbon number of a chain diol from which the aliphatic diol monomer unit is derived is preferably 2 or more.
<45> The resin composition according to <43> or <44>, wherein a carbon number of a chain diol from which the aliphatic diol monomer unit is derived is preferably 6 or less, more preferably 4 or less, still more preferably 3 or less, and still more preferably 2.
<46> The resin composition according to any one of <43> to <45>, wherein a chain diol from which the aliphatic diol monomer unit is derived is preferably at least one selected from the group consisting of ethylene glycol, 1,2-propanediol, 1,3-propanediol, diethylene glycol, and dipropylene glycol, preferably at least one selected from the group consisting of ethylene glycol, 1,2-propanediol, and 1,3-propanediol, and preferably ethylene glycol.
<47> The resin composition according to <40>, wherein a carbon number of an aliphatic diamine from which the aliphatic diamine monomer unit is derived is preferably 2 or more, more preferably 3 or more, and still more preferably 4 or more.
<48> The resin composition according to <40> or <47>, wherein a carbon number of an aliphatic diamine from which the aliphatic diamine monomer unit is derived is preferably 30 or less, more preferably 20 or less, and still more preferably 10 or less.
<49> The resin composition according to any one of <40>, <47>, and <48>, wherein an aliphatic diamine from which the aliphatic diamine monomer unit is derived is preferably at least one selected from the group consisting of a chain diamine and a cyclic diamine, more preferably a chain diamine, and still more preferably hexamethylenediamine.
<50> The resin composition according to any one of <1> to <49>, wherein a weight average molecular weight of the resin β is preferably 3,000 or more, more preferably 5,000 or more, still more preferably 10,000 or more, and still more preferably 15,000 or more.
<51> The resin composition according to any one of <1> to <50>, wherein a weight average molecular weight of the resin β is preferably 80,000 or less, more preferably 50,000 or less, and still more preferably 30,000 or less.
<52> The resin composition according to any one of <1> to <51>, wherein a glass transition temperature of the resin β is preferably 50°C or more, more preferably 90°C or more, and still more preferably 100°C or more.
<53> The resin composition according to any one of <1> to <52>, wherein a glass transition temperature of the resin β is preferably 250°C or less, more preferably 150°C or less, and still more preferably 120°C or less.
<54> The resin composition according to any one of <1> to <53>, wherein a content of the resin β in the resin composition is preferably 1% by mass or more, more preferably 5% by mass or more, and still more preferably 15% by mass or more.
<55> The resin composition according to any one of <1> to <54>, wherein a content of the resin β in the resin composition is preferably 90% by mass or less, more preferably 50% by mass or less, still more preferably 40% by mass or less, still more preferably 30% by mass or less, still more preferably 15% by mass or less, and still more preferably 10% by mass or less.
<56> The resin composition according to any one of <8> to <12>, wherein a percentage of an amount of substance of a hydrophilic group in the resin β based on an amount of substance of a nitrogen atom in the addition polymerization resin α in the resin composition is preferably 0.2 mol% or more, more preferably 0.5 mol% or more, and still more preferably 1 mol% or more.
<57> The resin composition according to any one of <8> to <12> and <56>, wherein a percentage of an amount of substance of a hydrophilic group in the resin β based on an amount of substance of a nitrogen atom in the addition polymerization resin α in the resin composition is preferably 60 mol% or less, more preferably 10 mol% or less, and still more preferably 5 mol% or less.
<58> The resin composition according to any one of <8> to <12> and <56> and <57>, wherein a percentage of an amount of substance of a hydrophilic group in the resin β based on an amount of substance of a nitrogen atom in the addition polymerization resin α in the resin composition is preferably 0.2 mol% to 60 mol%, more preferably 0.5 mol% to 10 mol%, and still more preferably 1 mol% to 5 mol%.
<59> The resin composition according to any one of <1> to <58>, wherein a glass transition temperature (Tg) of the resin composition is preferably 100°C or more, more preferably 150°C or more, still more preferably 200°C or more, and still more preferably 240°C or more.
<60> The resin composition according to any one of <1> to <59>, wherein a glass transition temperature (Tg) of the resin composition is preferably 300°C or less, more preferably 280°C or less, and still more preferably 270°C or less.

### EXAMPLES

The pressure is expressed in an absolute pressure. "Normal pressure" refers to 101.3 kPa.

### <Preparation of water-dispersible resin composition>

### [Synthesis of addition polymerization resin α1]

Into a 300 mL separable flask equipped with a thermometer, a cooling tube, and a stirring blade were charged 37.5 g (217 mmol) of N-phenylmaleimide (manufactured by FUJIFILM Wako Pure Chemical Corporation) as a monomer and 212.54 g of N,N-dimethylformamide (manufactured by FUJIFILM Wako Pure Chemical Corporation) as a solvent, and the mixed solution was stirred for dissolution. After the dissolution, the solution was bubbled with nitrogen introduced through a nitrogen introduction tube, and thus a 30-minute nitrogen purge was performed. Thereafter, the temperature was raised to 70°C under a flow of nitrogen, and at a time point when the liquid temperature reached 70°C, a solution obtained by dissolving 0.25 g (1.04 mmol) of V-601 (manufactured by FUJIFILM Wako Pure Chemical Corporation) in 10 g of N,N-dimethylformamide was added as a polymerization initiator solution, and the mixture was stirred at 70°C for 6 hours to perform polymerization. The reaction liquid was cooled, then reprecipitation and washing with ethanol (manufactured by FUJIFILM Wako Pure Chemical Corporation) were performed, and the product was dried under reduced pressure at 150°C and 1 kPa or less for 12 hours or more to obtain an addition polymerization resin α1 as a white solid.

### [Synthesis of addition polymerization resin α2]

The same procedure as in the method for synthesizing the addition polymerization resin α1 was performed except that a starting solution obtained by dissolving 0.083 g (0.50 mmol) of 2,2-azobis(isobutyronitrile) (manufactured by FUJIFILM Wako Pure Chemical Corporation) in 10 g of N,N-dimethylformamide was added as a polymerization initiator solution to obtain an addition polymerization resin α2.

### [Synthesis of addition polymerization resin α3]

Into a 300 mL separable flask equipped with a thermometer, a cooling tube, and a stirring blade were charged 7.98 g (38.7 mmol) of sodium p-styrenesulfonate (manufactured by FUJIFILM Wako Pure Chemical Corporation) as a monomer, 8.55 g of styrene (manufactured by FUJIFILM Wako Pure Chemical Corporation), 20.96 g (121 mmol) of N-phenylmaleimide (manufactured by FUJIFILM Wako Pure Chemical Corporation) as monomers, and 212.50 g of N,N-dimethylformamide (manufactured by FUJIFILM Wako Pure Chemical Corporation) as a solvent, and the mixed solution was stirred for dissolution. After the dissolution, the solution was bubbled with nitrogen introduced through a nitrogen introduction tube, and thus a 30-minute nitrogen purge was performed. Thereafter, the temperature was raised to 85°C under a flow of nitrogen, and at a time point when the liquid temperature reached 85°C, an initiator solution obtained by dissolving 0.28 g (1.2 mmol) of V-601 (manufactured by FUJIFILM Wako Pure Chemical Corporation) in 5 g of N,N-dimethylformamide was added as a polymerization initiator solution, and the mixture was stirred at 85°C for 6 hours to perform polymerization. The reaction liquid was cooled, then reprecipitation and washing with ethanol (manufactured by FUJIFILM Wako Pure Chemical Corporation) were performed, and the product was dried under reduced pressure at 150°C and 1 kPa or less for 12 hours or more to obtain an addition polymerization resin α3 as a white solid.

### [Synthesis of addition polymerization resin α4]

The same procedure as in the method for synthesizing the addition polymerization resin α3 was performed except that 3.76 g (36.1 mmol) of styrene (manufactured by FUJIFILM Wako Pure Chemical Corporation) and 6.25 g (36.0 mmol) of N-phenylmaleimide (manufactured by FUJIFILM Wako Pure Chemical Corporation) were charged as monomers, and a solution obtained by dissolving 0.059 g (0.36 mmol) of 2,2-azobis(isobutyronitrile) (manufactured by FUJIFILM Wako Pure Chemical Corporation) in 5 g of N,N-dimethylformamide was charged as a polymerization initiator solution to obtain an addition polymerization resin α4.

### [Synthesis of addition polymerization resin α5]

The same procedure as in the method for synthesizing the addition polymerization resin α3 was performed except that 10.00 g (67.9 mmol) of N-phenylacrylamide (manufactured by FUJIFILM Wako Pure Chemical Corporation) as a monomer and 56.67 g of N,N-dimethylformamide (manufactured by FUJIFILM Wako Pure Chemical Corporation) as a solvent were charged, and an initiator solution obtained by dissolving 0.056 g (0.34 mmol) of 2,2-azobis(isobutyronitrile) (manufactured by FUJIFILM Wako Pure Chemical Corporation) in 5 g of N,N-dimethylformamide was charged as an initiator solution to obtain an addition polymerization resin α5.

### [Synthesis of addition polymerization resin α6]

The same procedure as in the method for synthesizing the addition polymerization resin α3 was performed except that 7.33 g (35.5 mmol) of sodium p-styrenesulfonate (manufactured by FUJIFILM Wako Pure Chemical Corporation) and 29.77 g (171.9 mmol) of N-phenylmaleimide (manufactured by FUJIFILM Wako Pure Chemical Corporation) as a monomers, and 212.50 g of N,N-dimethylformamide (manufactured by FUJIFILM Wako Pure Chemical Corporation) as a solvent were charged, and an initiator solution obtained by dissolving 0.24 g (1.0 mmol) of V-601 (manufactured by FUJIFILM Wako Pure Chemical Corporation) in 5 g of N,N-dimethylformamide was added as a polymerization initiator solution to obtain an addition polymerization resin α6.

### [Synthesis of Resin β1]

Into a 2 L stainless steel separable flask (with a K tube, a stirrer, a nitrogen inlet tube), 97.7 g of dimethyl 2,6-naphthalenedicarboxylate (manufactured by Tokyo Chemical Industry Co., Ltd., first class), 40.6 g of dimethyl sodium 5-sulfoisophthalate (manufactured by FUJIFILM Wako Pure Chemical Corporation), 76.7 g of ethylene glycol (manufactured by FUJIFILM Wako Pure Chemical Corporation, highest quality), 82 mg of titanium tetrabutoxide (manufactured by Tokyo Chemical Industry Co., Ltd., first class), and 506 mg of sodium acetate (manufactured by FUJIFILM Wako Pure Chemical Corporation, highest quality) were added, the external temperature was raised from 140°C to 260°C over 1 hour with the mantle heater with stirring under normal pressure and a nitrogen atmosphere, and the mixture was stirred for 6.5 hours at the temperature to perform a transesterification reaction. Then, the external temperature was raised from 260 to 290°C over 30 minutes, and at the same time, the pressure was reduced from normal pressure to 5.3 kPa to perform a reaction for 1 hour and a half under the conditions. Then, a reaction was performed with stirring at 800 Pa for 30 minutes, and then the pressure was returned to normal pressure. The external temperature was raised from 290°C to 295°C at normal pressure over 15 minutes, then a reaction was performed with stirring at 420 Pa for 15 minutes, and then, a reaction was performed with stirring while gradually increasing the degree of pressure reduction from 470 Pa to 100 Pa over 15 minutes to obtain a resin β1.

### [Synthesis of Resin β2]

Into a glass reactor having an internal capacity of 500 mL and equipped with a stirring blade, 100 g of N-methylpyrrolidone (manufactured by Tokyo Chemical Industry Co., Ltd.) was placed. Subsequently, 3.62 g of terephthalic acid (manufactured by Tokyo Chemical Industry Co., Ltd.), 2.19 g of monosodium 5-sulfoisophthalate (manufactured by Tokyo Chemical Industry Co., Ltd.), 3.48 g of hexamethylenediamine (manufactured by Tokyo Chemical Industry Co., Ltd.), and 6.06 g of 4-methylmorpholine (manufactured by Tokyo Chemical Industry Co., Ltd.) were charged into the reactor, and stirred at 70 rpm for 2 hours. Then, the temperature was lowered to 5°C, 20.7 g of 4-(4,6-dimethoxy-1,3,5-triazine-2-yl)-4-methylmorpholinium chloride (manufactured by Tokyo Chemical Industry Co., Ltd.) was added, and stirring was continued in the air for 6 hours while maintaining the temperature at 5°C. After the reaction, the temperature was returned to room temperature, a DMF/methanol mixed solution (mass ratio: 2/1) was poured, and the mixture was allowed to stand to precipitate the resin. The resin was separated by filtration and dried at 150°C under reduced pressure (1 kPa or less) for 12 hours or more to obtain a resin β2.

### [Synthesis of resin composition 1]

Into a 2 L stainless steel separable flask (with a K tube, a stirrer, a nitrogen inlet tube), 23.7 g of dimethyl 2,6-naphthalenedicarboxylate (manufactured by Tokyo Chemical Industry Co., Ltd., first class), 52.1 g of dimethyl sodium 5-sulfoisophthalate (manufactured by FUJIFILM Wako Pure Chemical Corporation), 117.3 g of bisphenoxyethanolfluorene (manufactured by Osaka Gas Chemicals Co., Ltd.), 22.4 g of ethylene glycol (manufactured by FUJIFILM Wako Pure Chemical Corporation, highest quality), 26 mg of titanium tetrabutoxide (manufactured by Tokyo Chemical Industry Co., Ltd., first class), and 866 mg of sodium acetate (manufactured by FUJIFILM Wako Pure Chemical Corporation, highest quality) were charged, the external temperature was raised from 180°C to 260°C over 1 hour with the mantle heater with stirring under normal pressure and a nitrogen atmosphere, and the mixture was stirred for 4 hours at the temperature to perform a transesterification reaction. Tetrabutylphosphonium dodecylbenzenesulfonate (17.6 g) (manufactured by TAKEMOTO OIL & FAT Co., Ltd., product name: ELECUT S-418) was added thereto, and the resulting mixture was stirred for 25 minutes. Then, the external temperature was raised from 260°C to 290°C over 1 hour and 5 minutes, and the mixture was stirred for 10 minutes. Further, the temperature was raised to 300°C over 35 minutes and simultaneously the pressure was reduced from normal pressure to 1.3 kPa to perform a reaction, then the temperature was raised from 305 °C to 310 over 20 minutes and simultaneously the pressure was reduced from normal pressure to 1.3 kPa to perform a reaction. The temperature was raised to 315°C, then a reaction was performed with stirring while gradually increasing the degree of pressure reduction from 1.4 kPa to 140 Pa over 25 minutes, and then a reaction was further performed at 315°C and 76 Pa for 25 minutes to obtain a resin composition 1 containing a resin β3.

The percentage of each monomer unit based on the total of all monomer units calculated from the addition amount of the raw material in the addition polymerization resins a1 to 6, each weight average molecular weight, glass transition temperature, carbonyl group amount, and nitrogen atom amount of addition polymerization resins a1 to 6, and each sulfonate group amount calculated from the percentage of each monomer unit of the addition polymerization resins a1 to 6 are shown in Table 1. The percentage of each monomer unit A based on the total of all monomer units of the resins β1 to 3, the monomer units B and C based on the total of all monomer units of the resins β1 to 3 calculated from the addition amount of the raw material, and the sulfonate group amount calculated from the percentage of the monomer units of each resin are shown in Table 2. The percentage of each monomer unit in the resin β1 and the resin β3 was calculated on the assumption that an equal amount of diol to the total amount of substance of the charged dimethyl 2,6-naphthalenedicarboxylate and dimethyl sodium 5-sulfoisophthalate was reacted and excessively added ethylene glycol was removed from the reaction system.

### <Preparation of water-dispersible resin compositions 1 to 7 and 9 to 11>

An N,N-dimethylformamide (manufactured by FUJIFILM Wako Pure Chemical Corporation) solution of 5% by mass of the addition polymerization resin α and an N,N-dimethylformamide solution of 5% by mass of the resin β were each prepared and compounded at a ratio so as to have the compositions shown in Table 3 or 4 to obtain N,N-dimethylformamide solutions containing the addition polymerization resin α and the resin β. These solutions were poured into aluminum cups and dried under reduced pressure at 150°C and 1 kPa or less for 12 hours or more to obtain water-dispersible resin compositions 1 to 7 and 9 to 11.

### <Preparation of water-dispersible resin compositions 8 and 12>

A 1,1,1,3,3,3-hexafluoro-2-propanol (manufactured by FUJIFILM Wako Pure Chemical Corporation) solution of 5% by mass of the addition polymerization resin α and a 1,1,1,3,3,3-hexafluoro-2-propanol solution of 5% by mass of the resin β were each prepared and compounded at a ratio so as to have the composition shown in Table 3 or 4 to obtain solutions of 1,1,1,3,3,3-hexafluoro-2-propanol containing the addition polymerization resin α and the resin β. These solutions were poured into aluminum cups and dried under reduced pressure at 150°C and 1 kPa or less for 12 hours or more to obtain water-dispersible resin compositions 8 and 12.

### [Preparation of water-dispersible resin composition 13]

An N,N-dimethylformamide (manufactured by FUJIFILM Wako Pure Chemical Corporation) solution of 5% by mass of the addition polymerization resin α6 and an N,N-dimethylformamide solution of 5% by mass of the resin composition 1 were each prepared and compounded at a ratio so as to have the composition shown in 4 to obtain N,N-dimethylformamide solutions containing the addition polymerization resin a6 and the resin β3. These solutions were poured into an aluminum cup and dried under reduced pressure at 150°C and 1 kPa or less for 12 hours or more to obtain a water-dispersible resin composition 13.

**[Table 1]**

| | Percentage of each monomer unit based on total of all monomer units in each resin [mol%] | | Weight average molecular weight | Tg (°C) | Carbonyl group amount (mmol/g) | Nitrogen atom amount (mmol/g) | Sulfonate group amount (mmol/g) |
|---|---|---|---|---|---|---|---|
| | Monomer unit derived from N-phenylmaleimide | Monomer unit derived from N-phenylacrylamide | | | | | |
| Addition polymerization resin a1 | 100 | - | 6500 | 293 | 11.5 | 5.8 | - |
| Addition polymerization resin α2 | 100 | - | 8100 | 227 | 11.5 | 5.8 | - |
| Addition polymerization resin α3 | 50 | - | 78000 | 207 | 6.5 | 3.2 | 0.98 |
| Addition polymerization resin α4 | 59 | - | 157000 | 223 | 8.2 | 4.1 | - |
| Addition polymerization resin a5 | - | 100 | 70000 | 160 | 6.8 | 6.8 | - |
| Addition polymerization resin o6 | 50 | - | 36400 | 321 | 5.2 | 2.6 | 2.6 |

**[Table 2]**

| | Percentage of each monomer unit based on total of all monomer units in each resin [mol%] | | | Weight average molecular weight | Tg (°C) | Sulfonate group amount (mmol/g) |
|---|---|---|---|---|---|---|
| | A | B | C | | | |
| Resin β1 | 12.5 | 37.5 | 50.0 | 19700 | 108 | 1.00 |
| Resin β2 | 13.5 | 36.5 | 50.0 | 14200 | 168 | 1.00 |
| Resin β3 | 32.2 | 17.8 | 50.0 | 25000 | 290 | 1.00 |

### [Analysis method]

[Percentage of amount of substance of monomer unit (monomer unit A) derived from dimethyl sodium 5-sulfoisophthalate based on total of amount of substance of all monomer units in water-soluble resin composition]

A sample was dissolved in a mixed solvent of deuterated chloroform and deuterated trifluoroacetic acid, and an amount of substance A obtained by dividing an integral value A of a peak derived from a benzene ring in a monomer unit (monomer unit A) derived from dimethyl sodium 5-sulfoisophthalate by the number of protons corresponding to the benzene ring in the monomer unit A and an amount of substance B obtained by dividing an integral value B of a peak derived from a naphthalene ring in a monomer unit (monomer unit B) derived from dimethyl 2,6-naphthalenedicarboxylate by the number of protons corresponding to the naphthalene ring in the monomer unit B were calculated by proton NMR measurement using NMR MR400 manufactured by Agilent. The value obtained by dividing the amount of substance A by 2 times the sum of the amount of substance A and the amount of substance B, expressed in percentage (100 × amount of substance A / (2 × (amount of substance A + amount of substance B)), was defined as the percentage of the amount of substance of the monomer unit A based on a total of the amount of substance of all monomer units in the water-soluble polyester resin.

### [Weight average molecular weight (Mw)]

A calibration curve was prepared from standard polystyrene or standard polymethyl methacrylate using a gel permeation chromatograph (GPC) method under the following conditions to determine the weight average molecular weight (Mw) .

### (Measurement condition 1: resin β1 and resin β2)

- Apparatus: HLC-8320 GPC (Detector integrated type, manufactured by TOSOH CORPORATION)
- Column: Shodex GPCHFIP-604, Shodex GPCHFIP-605 (manufactured by SHOWA DENKO K.K.)
- Eluent: HFIP/0.5 mM sodium trifluoroacetate
- Flow rate: 0.2 mL/min
- Column temperature: 40°C
- Detector: RI detector
- Calibration curve: Shodex STAMDARD M -75 (manufactured by SHOWA DENKO K.K.)
- Standard substance: polymethyl methacrylate (PMMA)

### (Measurement condition 2: addition polymerization resins a1 to 6 and resin β3)

- Apparatus: HLC-8320 GPC (Detector integrated type, manufactured by TOSOH CORPORATION)
- Column: α-M × 2 columns (7.8 mmI.D. × 30 cm, manufactured by TOSOH CORPORATION)
- Eluent: 60 mmol/L phosphoric acid + 50 mmol/L brominated lithium dimethylformamide solution
- Flow rate: 1.0 mL/min
- Column temperature: 40°C
- Detector: RI detector
- Standard substance: polystyrene

### Glass transition temperature (Tg)

The water-dispersible resin compositions were refined using a mortar, precisely weighed, and sealed in an aluminum pan, and the temperature was raised from 30°C to 350°C at 10°C/min and then cooled to 30°C at a cooling rate set to 150°C/min using a DSC apparatus (DSC 7020 manufactured by Seiko Instruments Inc.). The temperature was raised again to 350°C at 10°C/min to obtain a DSC curve, from which a glass transition temperature (°C) was determined. At the time of temperature rise, a baseline at which the calorific value becomes constant appears, and then an inflection point appears due to glass transition. A temperature at an intersection of a straight line obtained by extending the baseline to a high temperature side and a tangent at the inflection point was defined as a glass transition temperature.

### <Evaluation method>

### [Evaluation of appearance of film]

N,N-dimethylformamide (manufactured by FUJIFILM Wako Pure Chemical Corporation) solutions of 5% by mass of the water-dispersible resin compositions 1 to 7 and a 1,1,1,3,3,3-hexafluoro-2-propanol (manufactured by FUJIFILM Wako Pure Chemical Corporation) solution of 5% by mass of the water-dispersible resin composition 8 were obtained. Two drops of these mixed solutions were added onto a slide glass using a dropper, and dried at 150°C under reduced pressure (1 kPa or less) for 12 hours or more to obtain a film having a thickness of 30 µm. The thickness of the slide glass before film formation and the total of thicknesses of the film and the slide glass were measured using a micrometer, and the thickness of the film was calculated from the difference. The appearance of each film is shown in Table 3.

### [Evaluation of appearance of film]

N,N-dimethylformamide (manufactured by FUJIFILM Wako Pure Chemical Corporation) solutions of 5% by mass of the water-dispersible resin compositions 9 to 11 and 13 and a 1,1,1,3,3,3-hexafluoro-2-propanol (manufactured by FUJIFILM Wako Pure Chemical Corporation) solution of 5% by mass of the water-dispersible resin composition 12 were obtained. Two drops of these mixed solutions were added onto a slide glass using a dropper, and dried at 150°C under reduced pressure (1 kPa or less) for 12 hours or more to obtain a film having a thickness of 30 µm. The thickness of the slide glass before film formation and the total of thicknesses of the film and the slide glass were measured using a micrometer, and the thickness of the film was calculated from the difference. The appearance of each film is shown in Table 4.

### [Evaluation of water dispersibility]

Deionized water (100 mL) was charged in a 200 mL beaker, the temperature was raised to 70°C on a hot plate, and the temperature was maintained at 70°C until the end of this evaluation. The slide glass after the film formation was charged in the beaker, and the sample formed on the slide glass was immersed in the deionized water after the temperature was raised and held. The time until the film on the slide glass was removed from the slide glass was visually observed. The results are shown in Tables 3 and 4. The case where the film remains on the slide glass after a lapse of 60 minutes or the case where the film peels off and the shape of the film is maintained in water is described as insoluble. In the evaluation of water-dispersible resin composition 8, the temperature of deionized water was 90°C.

**[Table 3]**

| | | Composition of resin composition (% by mass) | | | | Resin β in resin composition/ addition polymerization resin α × 100 (mol%) | Sulfonate group amount in resin composition (mmol/g) | Tg of resin composition (°C) | Appearance of film | Water dispersibility (fine dispersion time/visual observation/ 70°C) |
|---|---|---|---|---|---|---|---|---|---|---|
| | | Addition polymerization resin α | | Resin β | | | | | | |
| | | Addition polymerization resin a1 | Addition polymerization resin α2 | Resin β1 | Resin β2 | | | | | |
| Example 1 | Water-dispersible resin composition 1 | 95 | - | 5 | - | 0.46 | 0.05 | 260 | Colorless and transparent | Less than 50 minute |
| Example 2 | Water-dispersible resin composition 2 | 90 | - | 10 | - | 0.97 | 0.1 | 249 | Colorless and transparent | Less than 50 minute |
| Example 3 | Water-dispersible resin composition 3 | 80 | - | 20 | - | 2.2 | 0.2 | 239 | Colorless and transparent | Less than 1 minute |
| Example 4 | Water-dispersible resin composition 4 | 70 | - | 30 | - | 3. 7 | 0.3 | 238 | Colorless and transparent | Less than 1 minute |
| Example 5 | Water-dispersible resin composition 5 | 50 | - | 50 | - | 8.7 | 0.5 | 118,226 | White turbidity | Less than 1 minute |
| Example 6 | Water-dispersible resin composition 6 | - | 60 | 40 | - | 5.8 | 0.6 | 182 | Colorless and transparent | Less than 1 minute |
| Example 7 | Water-dispersible resin composition 7 | - | 55 | 45 | - | 7. 1 | 0.55 | 124,181 | White turbidity | Less than 1 minute |
| Example 8 | Water-dispersible resin composition 8 | 70 | - | - | 30 | 3.7 | 0.3 | 243 | White turbidity | Less than 5 minute |
| Comparative Example 1 | Addition polymerization resin α1 | 100 | - | - | - | 0 | 0 | 293 | Colorless and transparent | Insoluble |

**[Table 4]**

| | | Composition of resin composition (% by mass) | | | | | | | Resin β in resin composition/ addition polymerization resin a × 100 (mol%) | Sulfonate group amount in resin composition (mmol/g) | Tg of resin composition (°C) | Appearance of film | Water dispersibility (fine dispersion time/visual observation/ 70°C) |
|---|---|---|---|---|---|---|---|---|---|---|---|---|---|
| | | Addition polymerization resin a | | | | Resin β | | | | | | | |
| | | Addition polymerization resin α3 | Addition polymerization resin α4 | Addition polymerization resin α5 | Addition polymerization resin α6 | Resin β1 | Resin β2 | Resin β3 | | | | | |
| Example 9 | Water-dispersible resin composition 9 | 70 | - | - | - | 30 | - | - | 6.6 | 0.99 | 212 | Colorless and transparent | Less than 1 minute |
| Example 10 | Water-dispersible resin composition 10 | - | 70 | - | - | 30 | - | - | 5.2 | 0.3 | 221 | Colorless and transparent | Less than 10 minute |
| Example 11 | Water-dispersible resin composition 11 | - | - | 70 | - | 30 | - | - | 6.3 | 0.3 | 145 | Colorless and transparent | Less than 5 minute |
| Example 12 | Water-dispersible resin composition 12 | - | - | - | 70 | - | 30 | - | 8.2 | 2.1 | 307 | White turbidity | Less than 1 minute |
| Example 13 | Water-dispersible resin composition 13 | - | - | - | 70 | - | - | 27 | 8.2 | 2.1 | 323 | White turbidity | Less than 1 minute |
| Comparative Example 2 | Addition polymerization resin α3 | 100 | - | - | - | - | - | - | 0 | 0.98 | 207 | Colorless and transparent | Insoluble |
| Comparative Example 3 | Addition polymerization resin | - | - | 100 | - | - | - | - | 0 | - | 160 | Colorless and transparent | Insoluble |

## Claims

1. A resin composition, comprising:
an addition polymerization resin a having a glass transition temperature of 150°C or more; and
a resin β having an aromatic dicarboxylic acid monomer unit A having a hydrophilic group and a dicarboxylic acid monomer unit B having no hydrophilic group.

2. The resin composition according to claim 1,
wherein the resin β has a monomer unit C derived from a monomer C having two functional groups that are reactive with a carboxy group.

3. The resin composition according to claim 2,
wherein the monomer C is at least one selected from the group consisting of a diol, a diamine, and an alkanolamine.

4. The resin composition according to any one of claims 1 to 3, wherein a mass ratio of the addition polymerization resin α to the resin β in the resin composition is 10/90 or more and 99/1 or less.

5. The resin composition according to any one of claims 1 to 4, wherein a content of the addition polymerization resin α in the resin composition is 10% by mass or more and 99% by mass or less.

6. The resin composition according to any one of claims 1 to 5, wherein a weight average molecular weight of the addition polymerization resin α is 1,000 or more and 1,000,000 or less.

7. The resin composition according to any one of claims 1 to 6, wherein a percentage of an amount of substance of the aromatic dicarboxylic acid monomer unit A based on a total of an amount of substance of all dicarboxylic acid monomer units in the resin β is 5 to 80 mol%.

8. The resin composition according to any one of claims 1 to 7, wherein a content of the hydrophilic group in the resin β is 0.5 to 3 mmol/g.

9. The resin composition according to any one of claims 1 to 8, wherein a weight average molecular weight of the resin β is 3,000 to 80,000.

10. The resin composition according to any one of claims 1 to 9, wherein a glass transition temperature of the resin β is 50°C or more and 250°C or less.

11. The resin composition according to any one of claims 1 to 10, wherein a content of the resin β is 1% by mass or more and 90% by mass or less.

12. The resin composition according to any one of claims 1 to 11, wherein the addition polymerization resin α contains a nitrogen atom.

13. The resin composition according to claim 12,
wherein a percentage of an amount of substance of a hydrophilic group in the resin β based on an amount of substance of a nitrogen atom in the addition polymerization resin α in the resin composition is 0.2 mol% or more and 60 mol% or less.

14. The resin composition according to claim 12 or 13, wherein a content of a nitrogen atom in the addition polymerization resin α is 0.5 mmol/g or more and 25 mmol/g or less.

15. The resin composition according to any one of claims 1 to 14, having a glass transition temperature of 100°C or more and 300°C or less.

16. The resin composition according to any one of claims 1 to 15, wherein a percentage of an amount of substance of the aromatic dicarboxylic acid monomer unit A based on a total of an amount of substance of all monomer units of the resin β is 5 mol% or more and 40 mol% or less.

17. The resin composition according to any one of claims 1 to 16, wherein a percentage of an amount of substance of the aromatic dicarboxylic acid monomer unit A based on a total of an amount of substance of all dicarboxylic acid monomer units in the resin β is 10 mol% or more and 80 mol% or less.

18. The resin composition according to any one of claims 1 to 17, wherein a percentage of an amount of substance of the dicarboxylic acid monomer unit B based on a total of an amount of substance of all monomer units in the resin β is 10 mol% or more and 45 mol% or less.

19. The resin composition according to any one of claims 1 to 18, wherein a percentage of an amount of substance of the dicarboxylic acid monomer unit B based on a total of an amount of substance of all dicarboxylic acid monomer units in the resin β is 20 mol% or more and 90 mol% or less.

20. The resin composition according to any one of claims 1 to 19, wherein a molar ratio of the aromatic dicarboxylic acid monomer unit A to the dicarboxylic acid monomer unit B in the resin β is 10/90 or more and 80/20 or less.

21. The resin composition according to any one of claims 1 to 20, wherein the hydrophilic group is a sulfonate group.

22. The resin composition according to any one of claims 1 to 21, wherein the addition polymerization resin α is a poly N-substituted maleimide.

23. The resin composition according to any one of claims 1 to 22, wherein a dicarboxylic acid from which the aromatic dicarboxylic acid monomer unit A is derived is at least one selected from the group consisting of a sulfonate group-containing aromatic dicarboxylic acid.

24. The resin composition according to any one of claims 1 to 23, wherein a dicarboxylic acid from which the aromatic dicarboxylic acid monomer unit A is derived is at least one selected from the group consisting of a sulfophthalic acid and a sulfonaphthalenedicarboxylic acid.

25. The resin composition according to any one of claims 1 to 24, wherein a dicarboxylic acid from which the dicarboxylic acid monomer unit B is derived is at least one selected from the group consisting of an aromatic dicarboxylic acid having no hydrophilic group and an aliphatic dicarboxylic acid having no hydrophilic group.

26. The resin composition according to any one of claims 1 to 25, wherein a dicarboxylic acid from which the dicarboxylic acid monomer unit B is derived is at least one selected from the group consisting of terephthalic acid, isophthalic acid, a furandicarboxylic acid, a naphthalenedicarboxylic acid, a cyclohexanedicarboxylic acid, and an adamantanedicarboxylic acid.

27. The resin composition according to any one of claims 1 to 26, wherein a glass transition temperature of the addition polymerization resin α is 350°C or less.

28. A method for removing a resin composition, comprising the step of:
bringing the resin composition according to any one of claims 1 to 27 into contact with water to dissolve the resin composition.
